# EUROPEAN PATENT APPLICATION

(11) **EP 4 575 952 A1**
(43) Date of publication of application: **25.06.2025**
(21) Application number: 23217584.4
(22) Date of filing: 18.12.2023
(51) Int. Cl.: G06Q 10/087, G06Q 30/0601, G06T 7/00, G06V 20/20

(54) **METHOD FOR DETERMINING AN ADHESIVE SUITABLE FOR BONDING TWO OR MORE SURFACES**

(71) Applicant: Henkel AG & Co. KGaA, 40589 Düsseldorf (DE)
(72) Inventor: Maier, Maximilian, 40223 Düsseldorf (DE); Waloch, Christoph, 40764 Langenfeld (Rheinland) (DE); Frank, Michael, 41468 Neuss (DE); Hartmann, Peter, 40589 Düsseldorf (DE); Kelly, Ruth, Dublin, 15 (IE); Sam, Veasna, 40589 Düsseldorf (DE)

(57) **Abstract**

The invention relates to method implemented by a processor for determining an adhesive suitable for bonding two or more surfaces. An information relating to the surfaces comprising the material type two surfaces is obtained. Using a model associating surfaces with adhesives suitable to bond them together, a set of adhesives suitable for bonding the two or more surfaces is determined. An optical signal enabling identification of adhesive products is acquired using an optical imaging device by orienting the optical imaging device towards an adhesive product. Based on the signal, it is determined whether the adhesive product corresponds to an adhesive from the determined set. If that is the case a notification signal highlighting the identified adhesive product to a user is output.

## Description

### Technical Field

The invention relates to a method for identifying an adhesive, for example in a retail environment, using optical imaging systems such as augmented or mixed reality devices.

### Technological Background

Bonding two or more surfaces together is generally done either by using some mechanical means such as screws and bolts or using adhesives. When selecting which adhesive to use for performing the bonding of two or more surfaces, users generally face a difficult choice among a plurality of possibilities.

To assist users in finding the right adhesive to bond two or more surfaces together, chatbots are sometimes used to navigate users through an adhesive selection process by limiting the available options for performing the bonding task to a set of suitable adhesives. Such chatbots have the disadvantage that they do not identify an adhesive specifically and still require further user experience and expertise to look for the availability of a corresponding product by spending time browsing on a shelf or in a warehouse for example. Since products generally look the same and the technical information provided may not successfully distinguish them from similar products, the selection process is sometimes prone to errors.

There is therefore still a need for a solution to determine which adhesive is suitable to perform a bonding task with little search effort and low probability of error.

### Summary of the invention

The present invention provides a method for determining an adhesive suitable for bonding two or more surfaces, the method being implemented by a processor and comprising:
- obtaining an information relating to the two or more surfaces to be bonded, wherein the information comprises at least a material type of at least two surfaces from the two or more surfaces;
- determining, using a model associating surfaces to be bonded with adhesives suitable for bonding surfaces together, a set of adhesives comprising at least one adhesive suitable for bonding the two or more surfaces;

- acquiring, using an optical imaging device, an optical signal enabling identification of adhesive products by orienting the optical imaging device towards at least one adhesive product;
- determining, based on the acquired optical signal, whether the at least one adhesive product corresponds to an adhesive from the determined set of adhesives;
- upon identifying an adhesive product corresponding to an adhesive belonging to the determined set of adhesives, output a notification signal highlighting the identified adhesive product to a user.

Unlike existing methods which require a user to process a lot of graphical and textual information in order to identify a most suitable adhesive, the present invention provides a reliable and fast method, that is not prone to human error, to identify an adhesive that is suitable for performing a bonding task.

The acquisition of the information relating to the two or more surfaces to be bound can typically either be provided in a classical way by a direct input from a user or be extracted from images of the two or more surfaces to be bound. The expression "two or more" indicates that it is in some context possible to use an adhesive that is generally suitable to bond two surfaces together to bond more complex objects that are made of more than two surfaces, in particular in the event of repairing a broken object or bonding geometrically complex surfaces together. The "model associating surfaces to be bonded with adhesives suitable for bonding surfaces together" is typically a chart from a database that associates existing adhesives to their preferred application context. This model can generally be established based on testing of the properties of adhesives, extracted from the data sheets of adhesives or be generated using machine learning techniques based on information regarding adhesives used in different context to bond different types of surfaces.

Advantageously, the identification of a product related to a suitable adhesive for performing a bonding task can be then made using optical imaging devices equipped with a camera such as a smartphone, a tablet, a virtual reality device or a mixed reality device. A camera whose images are then analyzed can also be used.

The optical signal that is acquired can advantageously be an image, a video stream and its content as a signal can be processed by the processor which can be located in the optical imaging device or located elsewhere (in a different device in communication with the optical imaging device). The processing can for example identify the adhesive product based on a watermark, a code, a label or a shape of the product or its packaging.

Once the identified adhesives products are compared to the identified set of adhesives suitable to accomplish the bonding task, and when one or more of the identified adhesive products correspond to an adhesive from the identified set, the invention generates a second signal for example on the image recorded with the camera or in the virtual reality or mixed reality environment to make the suitable adhesive products stand out as being suitable products.

According to an embodiment, the method may further comprise:
- obtaining a desired bonding target from the user;
- determining, using the model associating surfaces to be bonded with adhesives suitable to bond surfaces together, the set of adhesives comprising at least one adhesive suitable for bonding the two or more surfaces, in accordance with the desired bonding target.

By obtaining not only information regarding the material types of two or more surfaces to be bonded together it is possible to provide even more specific criteria for determining the most suitable adhesive for performing a bonding task.

According to an embodiment, the desired bonding target is selected from among:
- repairing a broken item,
- sealing a space between two or more surfaces,
- fixing a first free surface onto a second non-movable surface,
- fixing two or more free surfaces together,
- bonding the two or more surfaces while ensuring a lowest environmental impact through the use of the adhesive,
- bonding the two or more surfaces while reducing an amount of adhesive used,
- bonding the two or more surfaces while reducing the carbon footprint attributable to the use of the adhesive,
- bonding the two or more surfaces while maximizing the bonding strength between the two or more surfaces.

In particular, if a set comprises many different adhesives potentially suitable for performing a given task, it is possible to apply the second criteria for distinguishing among the selected set between the most suitable adhesives that comply with the additional criteria.

According to an embodiment the optical signal enabling identification of adhesive products is at least one among: a quick response code on the adhesive product, a watermark on the adhesive product, a product-specific shape of a container of the adhesive product, a label on a shelf on which the adhesive product is placed, a watermark on the shelf on which the adhesive product is placed, a quick response code on the shelf on which the adhesive product is placed.

According to an embodiment, the optical signal enabling identification of adhesive products may be acquired from a watermark or sign or quick response code not visible in a visible range (between 400 nm and 800 nm). For example the optical signal can be acquired in the infrared range from a watermark or sign or pattern printed on a label of the product or on the packaging of the product or on a shelf. Alternatively, the optical signal may be acquired in the visible range (between 400 nm and 800 nm) but be acquired from watermark or sign corresponding to a fine pattern not perceptible to the human eye. Such a pattern can for example be obtained by printing a transparent film creating a minute contrast difference on a label on a shelf, on a portion of the product or on a packaging of the product.

According to an embodiment the optical imaging device is selected from one among: a camera, an augmented reality device, a mixed reality device, a portable phone equipped with a camera, a tablet.

According to an embodiment the model associating surfaces to be bonded with adhesives suitable to bond surfaces together is established by:
- selecting different combinations of two surface material types,
- for a plurality of samples of each combination of two surface material types, apply, for each sample of a combination a different adhesive;
- test the bonding strength obtained after application of the adhesives;
- associate an adhesive to a combination of two surface material types when the bonding strength is above a predetermined threshold.

According to an embodiment, the method further comprises: dispensing an amount of the identified adhesive product onto one of the two or more surfaces and bonding the two or more surfaces together.

According to an embodiment the notification signal highlighting the identified adhesive product to the user comprises an additional indication of a ranking of the identified adhesive product with respect to an ability of the corresponding adhesive to bond the two or more surfaces with a highest bonding strength.

According to an embodiment the ranking further comprises a ranking of the identified adhesive product with respect to an ability of the corresponding adhesive to bond the two or more surfaces with a highest compatibility with respect to the obtained desired bonding target.

According to an embodiment the information relating to the two or more surfaces to be bonded is obtained from at least one among: a written input by a user, an audio recording of a user. A written input by a user for example in a query window in a user interface can then be scanned to identify key words identifying material types. In case of an audio recording the recorded signals can be analyzed to recognize voice patterns associated with specific key words stored in a database to then identify the material types mentioned by a user.

According to an embodiment, obtaining an information relating to two or more surfaces to be bonded further comprises:
- obtaining an image of each of the two or more surfaces to be bonded using the at least one optical imaging device;
- analyzing, using an image processing model, the obtained image to identify a material type of each of the two or more surfaces to be bonded.

According to an embodiment the image processing model is trained using machine learning techniques from a database or images of surfaces of different material types.

### Brief description of the drawings

The present disclosure will hereinafter be described in conjunction with the following drawing figures, wherein like numerals denote like elements, and:
Fig. 1 is a schematic representation of an optical imaging devices and two surfaces that are intended to be bonded together;
Fig. 2 is a schematic representation of a plurality of adhesive products on shelves with specific features enabling an identification of individual products;
Fig. 3 is a schematic representation of optical imaging devices used to identify adhesive products from the shelves of figure 2;
Fig. 4 is a schematic representation of display highlighting adhesive products suitable for performing a bonding task with information regarding the products;
Fig. 5 is a flowchart showing exemplary steps of a method for determining an adhesive suitable for bonding two or more surfaces according to an exemplary embodiment.

### Detailed description

The invention pertains to a method for determining an adhesive that is suitable for bonding/gluing two or more surfaces. This determined adhesive can then be used by applying it on one of the two or more surfaces to bind together the two or more surfaces.

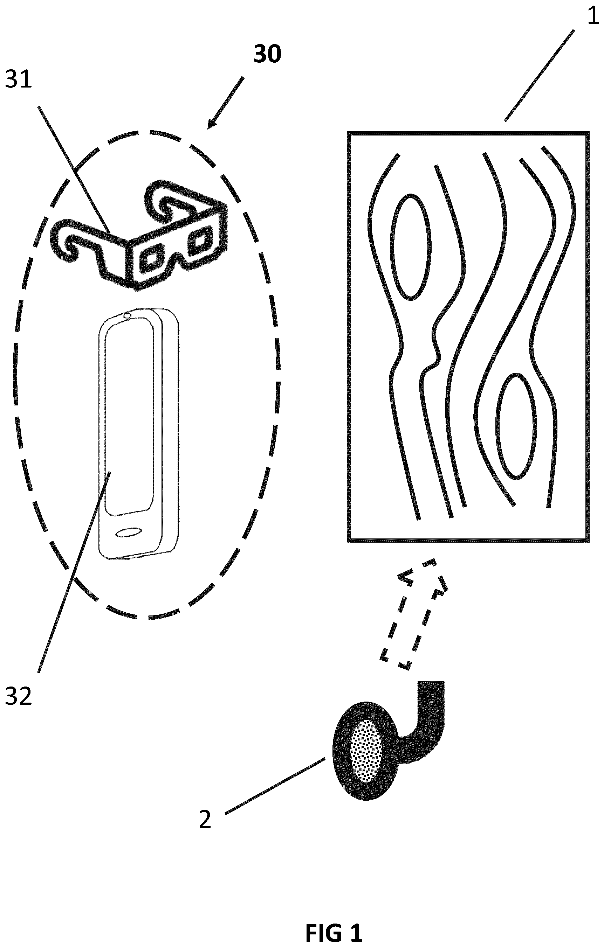

Figure 1 illustrates a first surface **1** resembling wood and a second surface **2** resembling a hook, potentially made of metal. To glue the surface **2** corresponding to a hook onto the surface **1** corresponding to wood a user typically would need to read many product descriptions or navigate through a website that would ask a series of questions to identify the nature of the surfaces to be glued/bonded together.

The invention can obtain information regarding the two or more surfaces **1**, **2** to be bonded together either by receiving some direct input from a user, or by analyzing some image information. Image information can for example be obtaining using an optical imaging device **30** such as a mixed reality device **31**, a portable phone **32** equipped with a camera, a camera, a virtual reality device or any other similar type of device. The image information thus acquired can be analyzed using known techniques to derive therefrom at least the material type of two of the two or more surfaces **1**, **2**.

To extract the information about the material type, a program can be used for example a program that was trained on images of different surface types using machine learning techniques in order to identify on any current image the material type of surfaces represented thereon. Other approaches such as a comparison of an image with a database of images of different surface types can be used to identify a surface type based on a highest similarity of a current image with an image from the database.

Information regarding a surface material type can also be provided by the user directly in written form or also in a voice recording. Voice recordings can be analyzed to identified sound wave patterns matching those of key words identifying surfaces that are known to a model that can then relate combination of surfaces to suitable adhesives for performing a bonding task. The use of a voice recording is particularly advantageous for people with certain disabilities that may find it hard to use textual input or who could suffer from deficient sight.

It is to be noted that it is possible to glue more than two surfaces together, for example three or more surfaces, and that it is not necessarily required to obtain the surface type of each of the surfaces to be glued together. For example, in case of a complex combination of pieces to be glued together, it may be sufficient to obtain the information of the two surfaces that are most difficult to glue together. It is also possible to identify the surface type of all surfaces and then seek the combination of surface types that require the strongest adhesive. A special program selecting the combination of two surface types among a group of more than two surface types can be used so that two identified surfaces that are known to require the strongest adhesive are then selected. This program can be configured to further check for compatibility between adhesives known to be suitable for gluing two surfaces together and the other surfaces in contact with the adhesive. In some cases adhesives may contain materials that can be considered as toxic or corrosive for certain surface types and this approach avoids the selection of incompatible adhesives.

It is also possible to provide not only the material type of the two or more surfaces 1, 2 but further other parameters that might be later used to influence the selection of a suitable adhesive, such as the size of the surfaces to be bonded, the porosity of the surfaces, the rugosity of the surfaces or environmental parameters surrounding the two or more surfaces **1**, **2** such as the temperature of a location at which the two or more surfaces **1**, **2** are located or the relative humidity in the vicinity of the two or more surfaces **1**, **2.** These parameters can be later used to select only adhesives that are compatible with these condition parameters, on top of the material type compatibility.

The identification of adhesives that are suitable for bonding/gluing the two or more surfaces **1**, **2** together is enabled using a model that associates surfaces to be bonded with adhesives suitable for bonding surfaces together. This model is typically generated using a set of tests conducted on different surfaces of different material types to test the efficiency of the bonding obtained with different adhesives. A ranking of the adhesives according to the bonding strength obtained for each combination of different types of surfaces can be included in the model. Since more than one adhesive can be suitable for bonding two or more surfaces **1**, **2** together, the model can output, in every situation, a set of adhesives capable of successfully performing the required bonding/gluing task.

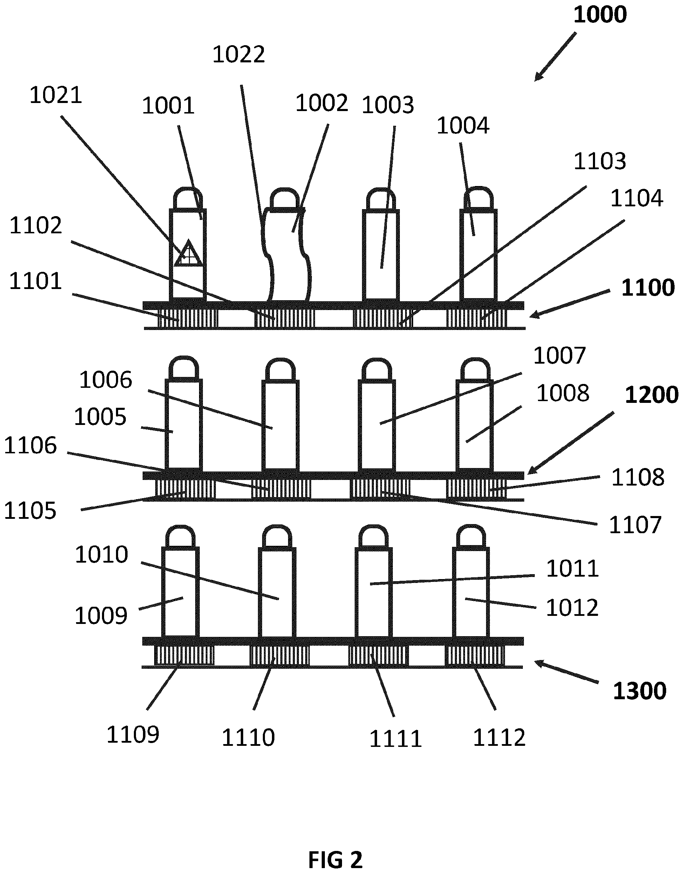

The invention simplifies the identification of a suitable adhesive using means available to a user when surrounded by different adhesive products, for example in a home environment or at a point of sale. Figure 2 illustrates a point of sale section **1000** comprise three shelves **1100**, **1200**, **1300**. These shelves **1100**, **1200**, **1300** each comprise adhesive products **1001**-**1012** (including more particularly adhesive products **1001**, **1002**, **1003**, **1004**, **1005**, **1006**, **1007**, **1008**, **1009**, **1010**, **1011**, **1012**). Each adhesive product **1001**-**1012** has a label **1101**-**1112** (including labels **1101**, **1102**, **1103**, **1104**, **1105**, **1106**, **1107**, **1108**, **1109**, **1110**, **1111**, **1112**) placed on the shelves **1100**, **1200**, **1300** allowing identification of each individual adhesive product **1001**-**1012**. Each adhesive product **1001**-**1012** may further be recognized due a specific packaging or container shape, as can be seen with the specific shape 1022 illustrated for adhesive product 1002. A watermark 1021 can also be present on the adhesive product 1001-1012 or its packaging or the label 1101-1112, to enable an easy identification thereof. It is also possible to use a specific visual code that can be recognized by the optical imaging device 30: a color code, bar code or quick response (QR) code can for example be found on the adhesive product 1001-1012 and/or on a packaging of the adhesive product 1001-1012 and/or on the label 1101-1112.

Figure 2 provides several different examples of identification means: labels **1101-1112,** shapes or watermarks **1021** that can be used to identify an adhesive product **1001-1012.** An adhesive product **1001-1012** may contain one or any combination of these different identification mean types, or it may contain more than one identification means of the same type: for example more than one watermark **1021**, more than one label **1101-1112.** This can for example be of interest when different watermarks **1021** or labels **1101-1112** code for different information types about the adhesive contained in an adhesive product **1001-1012.**

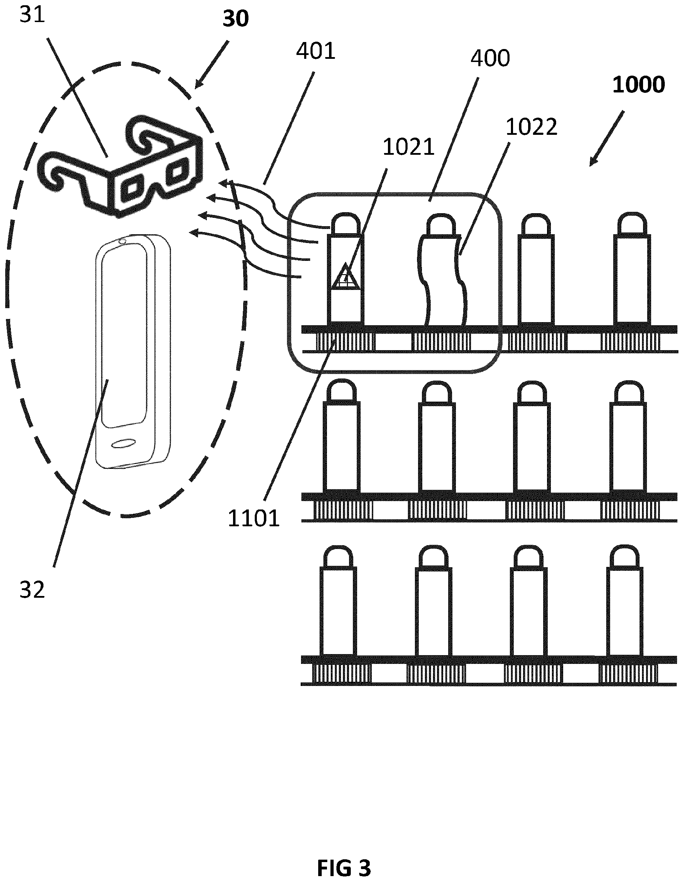

A user is generally not capable of making sense of these signs (identification means) in a meaningful way. These signs can be used by an optical imaging device **30** to identify the adhesive product **1001-1012.** Figure 3 provides one illustration of the use of an optical imaging device **30** to obtain a signal **401** enabling the specific identification of an adhesive product **1001-1012.** By directing the optical imaging device **30** towards the adhesive products **1001-1012**, images of the adhesive products **1001-1012** and/or labels **1101-1112** can be taken, or a video stream can be taken and analyzed to identify the identification means described above. Window **400** on figure 3 illustrates the field of view within which the optical imaging device **30** can acquire a signal **401** when it is directed towards an adhesive product **1001-1012**, for example by taking a picture, recording a video stream or performing a scanning operation.

The signs enabling identification of adhesive products may not visible in a visible range (between 400 nm and 800 nm). For example the signs can be a watermark or pattern printed on a label of the product, on the packaging of the product, on a shelf and can only be visible in the infrared range (between 800 nm and 1mm). The optical signal **401** may be acquired in the visible range (between 400 nm and 800 nm) but from a sign forming a fine pattern not perceptible to the human eye. Such a pattern can for example be obtained by printing a transparent film creating a minute contrast difference on a label on a shelf, on a portion of the product or on a packaging of the product.

Once the optical imaging device **30** acquires a signal **401** enabling identification of adhesive products, the adhesive to which the adhesive product **1001-1012** corresponds is identified and the identified adhesive products **1001-1012** are compared to the set of adhesive identified by the model. This way, the method of the invention can render more reliable the identification of adhesive products **1002**, **1012** suitable to perform a bonding/gluing task.

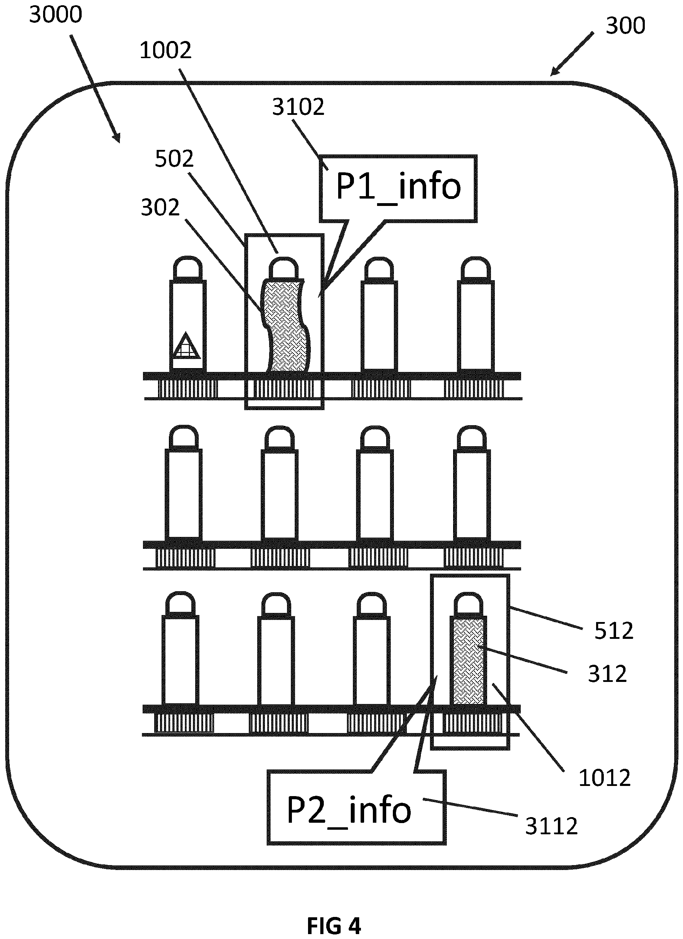

Figure 4 provides an illustration of a display **300** seen with a device such as a mixed reality device **31** or a smartphone **32.** The display **300** highlights two adhesive products **1002**, **1012** after identification of these adhesive products **1002**, **1012** as being part of a set of adhesive products deemed to be suitable for bonding two or more surfaces **1**, **2** together. The display **300** represents an image **3000** of the shelves **1100**, **1200**, **1300** of figure 2 containing adhesive products **1001-1012** thereon, but with additional information regarding the identified products. For example, a notification signal **3102**, **3112** can be provided in visual, audio or message form to a user informing the user of the list of products that are suitable for performing the desired bonding task. Different means for highlighting the identified suitable products can be used, alone or in combination with one another. It is for example possible on the display 300 or in a virtual reality environment to add a glowing effect around the identified products, to emphasize the products with a change of color **302**, **312**, to encircle the products with a line or case **502**, **512**.

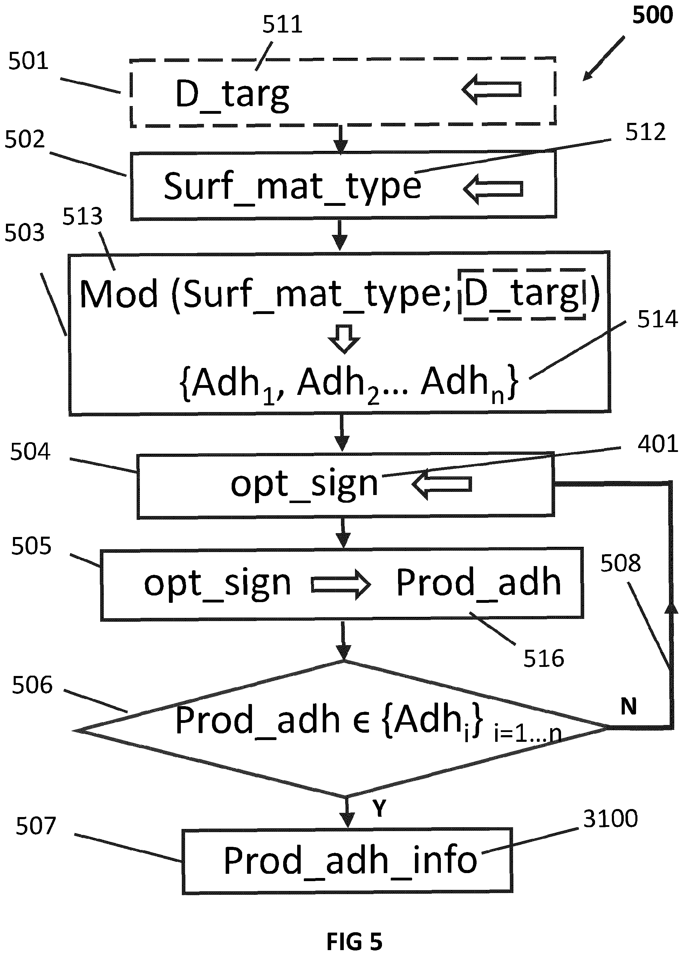

Figure 5 provides a flowchart summarizing steps of the method **500** described above. According to some optional embodiments, the method **500** can include an additional step consisting in obtaining **501** a desired bonding target **511** from a user. This desired bonding target **511** can for example be one among: repairing a broken item, sealing a space between two or more surfaces, fixing a first free surface onto a second non-movable surface, fixing two or more free surfaces together, bonding the two or more surfaces while ensuring a lowest environmental impact through the use of the adhesive, bonding the two or more surfaces while reducing an amount of adhesive used, bonding the two or more surfaces while reducing the carbon footprint attributable to the use of the adhesive, bonding the two or more surfaces while maximizing the bonding strength between the two or more surfaces.

To reduce the environmental impact (for example the carbon footprint) of the use of the adhesive, the method **500** may for example preferable select products that were produced locally or products that require fewer adhesive material to be dispense to perform the given bonding task.

The method **500** can then as described above include a step of obtaining **502** at least a material type **512** of at least two surfaces from the two or more surfaces **1**, **2**.

Then, based on the material type **512** and (if provided) the desired bonding target **511**, the method **500** uses a model **513** as described above to determine **503** a set **514** of adhesives suitable for bonding the two or more surfaces **1**, **2** together. If a desired bonding target **511** was provided then the set **514** of adhesives is further narrowed down to adhesives that are compatible with the provided desired bonding target **511.**

The method **500** then acquires **504** an optical signal **401** using the optical imaging device **30** as described above by directing the optical imaging device **30** towards adhesive products **1001-1012.**

The optical signal **401** is then processed to determine **505** whether any adhesive product **516** corresponds to an adhesive from the above-determined set **514.**

If at least one adhesive product 516 corresponds to an adhesive found in the set 514, then the method highlights the adhesive product 516 by outputting 507 a notification signal **3100** as described above. If no such adhesive product 516 is identified, then the method 500 can signal to a user to direct the optical imaging device 30 towards other adhesive products.

It is to be noted that the highlighting provides an advantage to user with disabilities who might have sight issues, be deaf or illiterate. For people with disabilities, the method of the invention provides a safe and convenient way to find a suitable adhesive product for performing a task. The method of the invention is also suitable for people that do not suffer from particular disabilities as it provides an error free means to find a suitable adhesive.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the various embodiments in any way. Rather, the foregoing detailed description will provide those skilled in the art with a convenient road map for implementing an exemplary embodiment as contemplated herein. It being understood that various changes may be made in the function and arrangement of elements described in an exemplary embodiment without departing from the scope of the various embodiments as set forth in the appended claims.

## Claims

1. A method (500) for determining an adhesive suitable for bonding two or more surfaces (1; 2), the method (500) being implemented by a processor and comprising:
- obtaining (502) an information relating to the two or more surfaces (1; 2) to be bonded, wherein the information comprises at least a material type (512) of at least two surfaces from the two or more surfaces (1; 2);
- determining (503), using a model (513) associating surfaces to be bonded with adhesives suitable for bonding surfaces together, a set (514) of adhesives comprising at least one adhesive suitable for bonding the two or more surfaces (1; 2);
- acquiring (504), using an optical imaging device (30), an optical signal (401) enabling identification of adhesive products by orienting the optical imaging device (30) towards at least one adhesive product (1001-1012);
- determining (505), based on the acquired optical signal (515), whether the at least one adhesive product (1002; 1012) corresponds to an adhesive from the determined set (514) of adhesives;
- upon identifying (506) an adhesive product (1002; 1012) corresponding to an adhesive belonging to the determined set of adhesives, output (507) a notification signal (3100) highlighting the identified adhesive product (1002; 1012) to a user.

2. The method (500) according to claim 1, further comprising:
- obtaining (501) a desired bonding target (511) from the user;
- determining (503), using the model (413) associating surfaces to be bonded with adhesives suitable to bond surfaces together, the set (514) of adhesives comprising at least one adhesive suitable for bonding the two or more surfaces (1; 2), in accordance with the desired bonding target (511).

3. The method (500) according to claim 2, wherein the desired bonding target (511) is selected from among:
- repairing a broken item,
- sealing a space between two or more surfaces (1; 2),
- fixing a first free surface onto a second non-movable surface,
- fixing two or more free surfaces together,
- bonding the two or more surfaces (1; 2) while ensuring a lowest environmental impact through the use of the adhesive,
- bonding the two or more surfaces (1; 2) while reducing an amount of adhesive used,
- bonding the two or more surfaces (1; 2) while reducing the carbon footprint attributable to the use of the adhesive,
- bonding the two or more surfaces (1; 2) while maximizing the bonding strength between the two or more surfaces (1; 2).

4. The method (500) according to any one of the preceding claims, wherein the optical signal (411) enabling identification of adhesive products is at least one among: a quick response code on the adhesive product, a watermark on the adhesive product, a product-specific shape of a container of the adhesive product, a label on a shelf on which the adhesive product is placed, a watermark on the shelf on which the adhesive product is placed, a quick response code on the shelf on which the adhesive product is placed.

5. The method (500) according to any one of the preceding claims, wherein the optical imaging device (30) is selected from one among: a camera, an augmented reality device, a mixed reality device (31), a portable phone (32) equipped with a camera, a tablet.

6. The method (500) according to any one of the preceding claims, wherein the model (513) associating surfaces to be bonded with adhesives suitable to bond surfaces together is established by:
- selecting different combinations of two surface material types,
- for a plurality of samples of each combination of two surface material types, apply, for each sample of a combination a different adhesive;
- test the bonding strength obtained after application of the adhesives;
- associate an adhesive to a combination of two surface material types when the bonding strength is above a predetermined threshold.

7. The method (500) according to any one of the preceding claims, further comprising: dispensing an amount of the identified adhesive product (1002; 1012) onto one of the two or more surfaces (1; 2) and bonding the two or more surfaces (1; 2) together.

8. The method (500) according to any one of the preceding claims, wherein the notification signal (3100) highlighting the identified adhesive product (1002; 1012) to the user comprises an additional indication of a ranking of the identified adhesive product (1002; 1012) with respect to an ability of the corresponding adhesive to bond the two or more surfaces (1; 2) with a highest bonding strength.

9. The method (500) according to claim 8, wherein the ranking further comprises a ranking of the identified adhesive product (1002; 1012) with respect to an ability of the corresponding adhesive to bond the two or more surfaces (1; 2) with a highest compatibility with respect to the obtained desired bonding target (511).

10. The method (500) according to any one of the preceding claims, where the information relating to the two or more surfaces (1; 2) to be bonded is obtained from at least one among: a written input by a user, an audio recording of a user.

11. The method (500) according to any one of the preceding claims, wherein obtaining an information relating to two or more surfaces (1; 2) to be bonded further comprises:
- obtaining an image of each of the two or more surfaces (1; 2) to be bonded using the at least one optical imaging device (30);
- analyzing, using an image processing model, the obtained image to identify a material type of each of the two or more surfaces (1; 2) to be bonded.

12. The method (500) according to claim 11, wherein the image processing model is trained using machine learning techniques from a database or images of surfaces of different material types.
